# EUROPEAN PATENT SPECIFICATION

(11) **EP 0 606 738 B1**
(45) Date of publication and mention of the grant of the patent: **08.07.1998**
(21) Application number: 93310010.9
(22) Date of filing: 13.12.1993
(51) Int. Cl.: G11B 15/44, G11B 15/665

(54) **Power transmitting device for tape recorder**
Kraftübertragungsvorrichtung für Bandaufzeichnungsgerät
Dispositif de transmission de force pour enregistreur à bande

(30) Priority: 11.12.1992 KR 9223944; 11.12.1992 KR 9223945; 26.02.1993 KR 932765
(43) Date of publication of application: 20.07.1994
(73) Proprietor: SAMSUNG ELECTRONICS CO., LTD., Suwon-city, Kyungki-do 441-373 (KR)
(72) Inventor: Park, Gun Choon, Suwon-city, Kyougki-do (KR); Choi, Do Young, Suwon-city, Kyungki-do (KR); Masaharu, Ohashi, Suwon-city, Kyungki-do (KR); Seo, Jae Kab, Suwon-city, Kyungki-do (KR)
(74) Representative: Stanley, David William

(56) References cited:
- EP-A- 0 045 328
- EP-A- 0 192 448
- DE-A- 3 126 012
- GB-A- 2 094 542

## Description

The present invention relates to tape recorders, and more particularly to the transmission of power therein.

In the context of this specification, the term "tape recorder" is used in its popular sense of including devices for recording onto and/or replaying from magnetic tapes.

Generally, tape recorders for recording and/or reproducing signals onto or from a magnetic tape which is transported along a predetermined path have units such as a drum with heads on a deck, a tape transport system for transporting the tape seated on reel tables, a tape loading system for closely contacting the tape to the drum side, and a reel-table driving system.

Accordingly, a conventional tape recorder separately includes a loading motor for driving the tape loading unit and a capstan motor for driving the reel tables.

However, a current trend is to minimise the size of tape recorders, and deck size must be further minimized in the case of a subminiature camcorder of pocket size. Despite this requirement, a conventional tape recorder has a loading motor for loading a tape towards the drum on the deck as well as a capstan motor for transporting the tape and driving the reel tables, so that there is a limit to the minimizing of the deck size, and there remains an appreciable weight.

EPA-A-192448 (Matsushita) discloses a tape recorder having a motor for driving a capstan, a cassette loading mechanism for loading a tape cassette at a predetermined position, a tape loading mechanism reciprocable between an inoperative position where the tape is ready to be drawn out from the tape cassette and an operative position where the tape is drawn out and wound on to a guide drum, an operating mode changing mechanism driven by the motor for changing the operating mode of the apparatus, a reel turntable driving mechanism for transmitting a rotational driving force of the motor to reel turntables, and a clutch for transmitting intermittently the driving force of the motor to the cassette loading, tape loading and operating mode changing mechanism.

It is to be noted that in the tape recorder disclosed in EP-A-192448, the cassette loading apparatus, the operating mode changing operation and the tape transporting operation are performed by a single motor. More precisely, the tape recorder disclosed in EP-A-192448 comprises a power transmitting device comprising successively a pulley, a belt and a gear; a power driving means having a differential gear mechanism for transmitting rotational force of said capstan motor to the loading system; and a power driving means having a gear for transmitting rotational force of said capstan motor to the tape transport system.

Preferred embodiments of the present invention aim to provide a simplified power transmitting device for a tape recorder.

According to one aspect of the present invention, there is provided a power transmitting device for a tape recorder for receiving power from a capstan motor to drive both a tape loading system and a tape transport system, said device comprising:
power transmitting means formed of a transmission gear for performing forward and backward rotation by said capstan motor, and a rotating gear for swinging at a predetermined angle around a shaft by being brought into meshing engagement with said transmission gear;
first power driving means having a first gear mounted on a deck for transmitting rotational force of said capstan motor to said loading system by being selectively brought into meshing engagement with said rotating gear;
second power driving means having a relay gear mounted on said deck for transmitting the rotational force of said capstan motor to said tape transport system by being selectively brought into meshing engagement with said rotating gear; and
position-control means for preventing said rotating gear from being pushed to deviate in position when driven by said power transmitting means to drive either said first or second power driving means.

Preferably, said power transmitting means comprises:
said transmission gear having first gear teeth in meshing engagement with a gear of said capstan motor, and second gear teeth in meshing engagement with first gear teeth of said rotating gear;
said rotating gear having said first gear teeth being selectively brought into meshing engagement with said second gear teeth of said transmission gear and said relay gear of said second power driving means; and
a swing arm for connecting said transmission gear to said rotating gear, and swinging around said shaft by said position-control means.

Preferably, said power transmitting means comprises a lever for causing said transmission gear to be brought into meshing engagement with said rotating gear; and
a pin projecting at one end of said lever at said rotating gear side.

Preferably, said first power driving means comprises a series of decelerating gears consisting of a plurality of gears consecutively arranged for receiving power from said rotating gear to drive said tape loading system.

Preferably, said second power driving means comprises said relay gear for receiving power from said power transmitting means; and driving and driven pulleys connected by means of a timing belt for transmitting power from said relay gear to an idler.

Preferably, said position-control means comprises a driving coil mounted on a substrate, and an armature disposed with a permanent magnet opposite to said driving coil and spaced apart therefrom by a predetermined distance, whereby said armature resiliently swings by a spring around a shaft to regulate the position of said lever of said rotating gear.

Preferably, said armature comprises a latch plate on one end of an arm extending to one side of the armature to control the position of said projecting pin formed on said lever.

Preferably, said armature swings around said shaft to release the locking of said projecting pin position when power is applied to said driving coil, and controls the position of said projecting pin by the restoring force of said spring when power is not applied to said driving coil.

Said position-control means may comprise:
an armature rotatably connected via a pin to one end of a lever projecting on one side of a swing arm of said power transmitting means;
a permanent magnet for swinging said armature by a predetermined angle;
a spring connected to one end of said lever of said swing arm and one end of said armature; and
a stator having first and second pole pieces close to said permanent magnet of said armature.

Preferably, said stator comprises a body and a coil wound on said body for supplying a predetermined current, whereby the polarity of said first and second pole pieces is determined by the current supplied to said coil, to swing said swing arm by the interaction with said permanent magnet.

The invention extends to a recorder and/or player provided with a power transmitting device according to the above aspect of the invention.

For a better understanding of the invention, and to show how embodiments of the same may be carried into effect, reference will now be made, by way of example, to the accompanying diagrammatic drawings, in which:
Figure 1 is a schematic plan view showing a tape deck for illustrating a first embodiment of a power transmitting device of a tape recorder according to the present invention;
Figure 2 is a view showing the construction of a principal portion of the power transmitting device shown in Figure 1;
Figures 3A and 3B are views of respective operational states of ports of the power transmitting device shown in Figure 1;
Figure 4 is a schematic plan view showing a tape deck for illustrating a second embodiment of a power transmitting device of a tape recorder according to the present invention;
Figure 5 is a view showing the construction of a principal portion of the power transmitting device shown in Figure 4;
Figure 6 is a view of an operational state of parts of the power transmitting device shown in Figure 4; and
Figures 7 and 8 are a plan view and a front view respectively illustrating the construction of a flanger which may be applied to the power transmitting device of Figure 4.

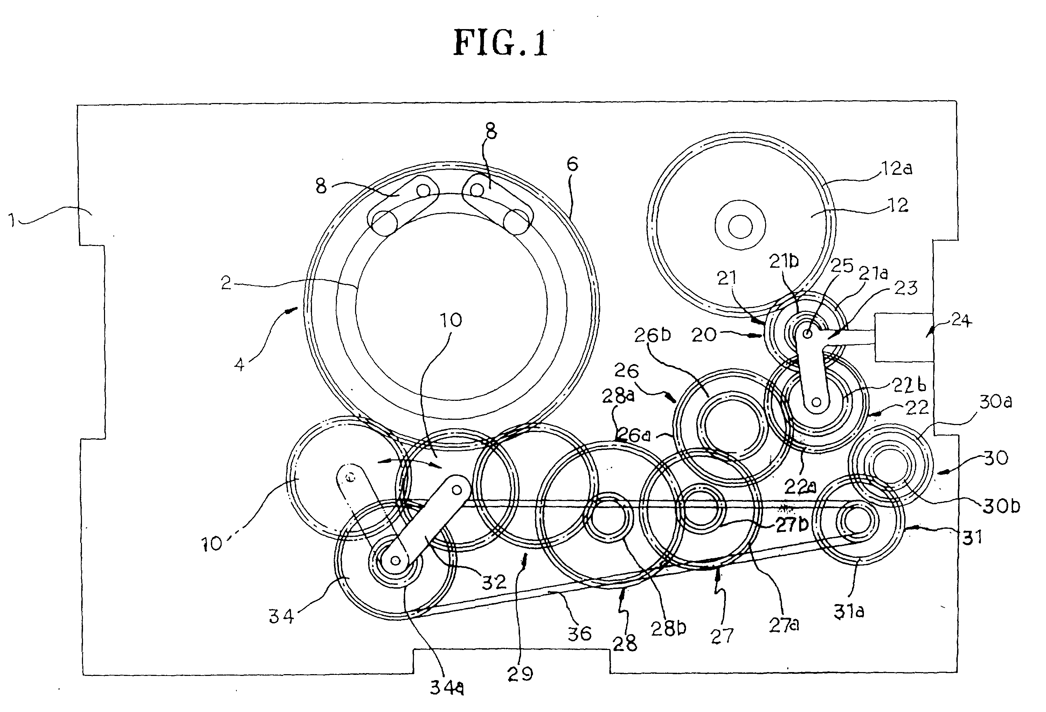

Referring to the deck forming the first embodiment of a power transmitting device according to the present invention which is schematically shown in Figure 1, a rotary drum 2 installed on the centre of the deck 1 is provided with a plurality of heads (not shown) for recording and/or reproducing signals on or from a tape. A tape loading unit 4 is placed around the outer circumference of the rotary drum 2 for transmitting the tape toward the rotary drum 2. The tape loading unit 4 comprises an ordinary ring gear 6, and pole bases 8 are moved along a predetermined path in accordance with the rotation of the ring gear 6 to load the tape towards the rotary drum 2.

Also, the deck 1 has a pair of reel tables (not shown) to which a tape cassette (not shown) is safely mounted, and these reel tables are driven in a normal way by means of an idler 10. The above-described tape loading unit 4 and idler 10 selectively deliver the rotational force of a capstan motor 12 disposed on the deck 1 by employing a power transmitting device 20, thereby either loading/unloading the tape on the one hand, or transporting (driving) the tape by driving the reel tables, on the other hand.

The power transmitting device 20 has a transmission gear 21 and a rotating gear 22 both installed on a swing arm 23, in which first gear teeth 21a of the transmission gear 21 are brought into meshing engagement with gear teeth 12a of the capstan motor 12, and second gear teeth 21b thereof are in meshing engagement with first gear teeth 22a of the rotating gear 22. The power transmitting device 20 which functions by selectively delivering the power of the capstan motor 12 to the tape loading unit 4 and idler 10 is rotated from side to side around a shaft 25 by a positioning controller 24 provided on one side of the swing arm 23 of the power transmitting device 20.

It is preferable that the positioning controller 24 serves to selectively swing the swing arm 23 of the power transmitting device 20 from left to right. The power of the capstan motor 12 is transmitted to the tape loading unit 4 via a first power transmitting device.

The first power transmitting device comprises of a series of decelerating or reduction gears comprising first, second, third and fourth gears 26, 27, 28 and 29, wherein first gear teeth 26a of the first gear 26 are selectively brought into meshing engagement with second gear teeth 22b of the rotating gear 22 in the power transmitting device 20, and second gear teeth 26b of the first gear 26 are in meshing engagement with first gear teeth 27a of the second gear 27. Second gear teeth 27b of the second gear 27 are brought into meshing engagement with first gear teeth 28a of the third gear 28, and second gear teeth 28b of the third gear 28 are in meshing engagement with the fourth gear 29 which is in turn brought into meshing engagement with the ring gear 6 of the tape loading unit 4. Consequently, the power of the capstan motor 12 is transmitted to the first power transmitting device by means of the power transmitting device 20, and then properly decelerated by means of the first power transmitting device to drive the tape loading unit 4, thereby permitting the loading and unloading operations of the tape.

In addition to the first power transmitting device, the power of the capstan motor 12 is also transmitted to the idler 10 via a second power transmitting device. That is, the second power transmitting device is formed such that the first gear teeth 22a of the rotating gear 22 of the power transmitting device 20 are selectively brought into meshing engagement with first gear teeth 30a of a relay gear 30, and second gear teeth 30b of the relay gear 30 are in meshing engagement with a gear 31a of a driving pulley 31.

Using a timing belt 36, the driving pulley 31 is connected to a driven pulley 34 which is connected to the idler 10 by an arm 32, and gear teeth 34a of the driven pulley 34 are in meshing engagement with the idler 10. Therefore, the power of the capstan motor 12 is transmitted to the idler 10 which in turn rotates the reel tables.

Hereinbelow, an example of operation of the power transmitting device according to the first embodiment of the present invention will be described.

Once the tape cassette is mounted on the reel tables of the deck 1, a cassette-in sensor (not shown) perceives the seating of the tape cassette to rotate the capstan motor 12, and the positioning controller 24 allows the swing arm 23 of the power transmitting device 20 to swing toward the first power transmitting device. Thus, since the second gear teeth 22b of the rotating gear 22 provided in the power transmitting device 20 are brought into meshing engagement with first gear teeth 26a of the first gear 26 in the first power transmitting device, the power of the capstan motor 12 is decelerated through the first to fourth gears 26, 27, 28 and 29 to be transmitted to the tape loading unit 4, thereby performing the loading and unloading operations of the tape.

At this time, the tape-loading speed can be set in an optimum state by suitably designing the deceleration ratio of the series of decelerating gears of the first power transmitting device. As is well-known in the art, speed-control sensors provided in the capstan motor 12 control the rotating speed of the capstan motor 12 to constantly and accurately control the tape loading speed of the tape loading unit 4.

When the tape is transported, once the tape loading is completed, the positioning controller 24 makes the swing arm 23 swing toward the relay gear 30 of the second power transmitting device. By this operation, the first gear teeth 22a of the rotating gear 22 provided in the power transmitting device 20 are brought into meshing engagement with the first gear teeth 30a of the relay gear 30, thereby rotating the relay gear 30. Accordingly, the power of the capstan motor 12 is transmitted to the idler 10 via the driving pulley 31 and driven pulley 34 which are linked to each other by means of the timing belt 36, and the idler 10 can rotate the reel tables.

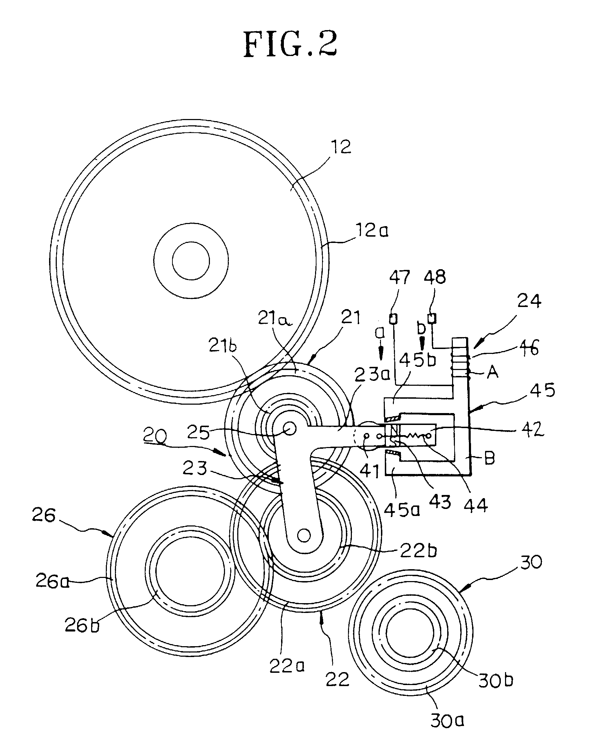

The positioning controller 24 of Figure 1 is illustrated in Figure 2 in detail, and includes a shaking lever or armature 42 rotatably connected by a pin 41 to the end of a lever 23a projecting on one side of the swing arm 23 of the power transmitting device 20. The armature 42 has a permanent magnet 43 with N and S poles on a predetermined portion thereof, and one end of the lever 23a of the swing arm 23 is resiliently connected to one end of the armature 42 by means of a spring 44.

The positioning controller 24 further includes a flanger or stator 45 installed such that the permanent magnet 43 of the armature 42 is placed to be close to first and second pole pieces 45a and 45b thereof. A coil 46 is wound around one side of the stator 45 to permit both ends thereof to be connected to first and second switches 47 and 48, and the polarities of portions A and B of the stator 45 are changed in accordance with the direction of current flowing through the coil 46.

Now, an example of operation of the positioning controller shown in Figure 2 will be described in detail.

As described above, once a tape cassette is mounted on the reel tables of the deck 1, the cassette-in sensor perceives the seating of the tape cassette, to rotate the capstan motor 12. At the same time, power is applied to the first switch 47 of the positioning controller 24 to allow the current to flow in the direction of an arrow "a" of the coil 46 shown in Figure 2, so that the portion A of the stator 45 has a polarity of S, and the portion B has a polarity of N.

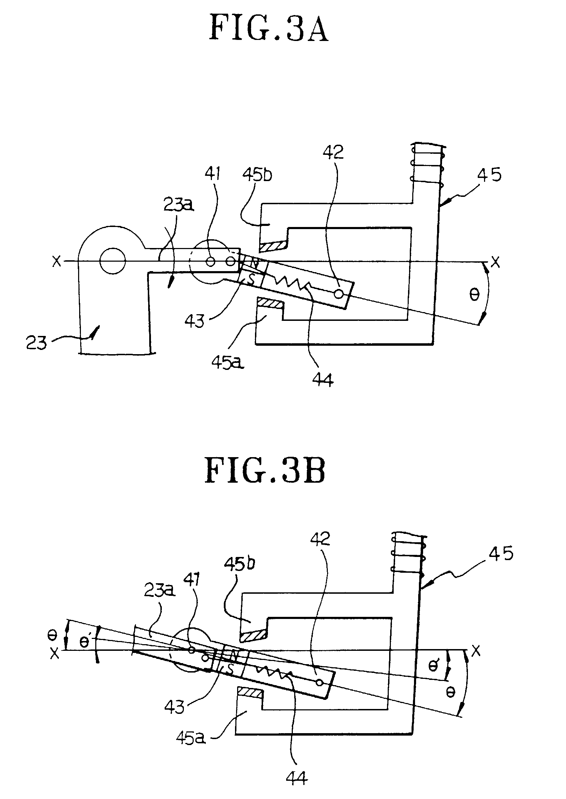

As a result, since the first and second pole pieces 45a and 45b of the stator 45 have a polarity of N, the N pole of the permanent magnet 43 provided on the armature 42 is subjected to a mutually repulsive magnetic force with the second pole piece 45b being of N polarity, whereas the S pole of the permanent magnet 43 is inclined to attract the first pole piece 45a being of N polarity. Thus, as shown in Figure 3A, the armature 42 swings toward the first pole piece 45a by an angle θ, using a line X-X as a reference. Here, for the reason that the lever 23a of the swing arm 23 and armature 42 are elastically connected by the spring 44 to be continuously pulled to each other, the spring 44 draws the lever 23a from the state shown in Figure 3A to swing the lever 23a clockwise by as much as θ, using the line X-X as the reference.

When the lever 23a of the swing arm 23 swings clockwise as described above, the second gear teeth 22b of the rotating gear 22 in the power transmitting device 20 are brought into meshing engagement with the first gear teeth 26a of the first gear 26 in the first power transmitting device to transmit the power of the capstan motor 12 to the first power transmitting device. The power decelerated through the first to fourth gears 26 to 29 is delivered to the tape loading unit 4 to perform the loading and unloading operations of the tape.

In the case of transporting the tape once it has been completely loaded, the power supplied to the first switch 47, as shown in Figure 2, is cut off but supplied to the second switch 48 to make the current flow in the direction "b" of the coil 46. Then, the portion A of the stator 45 has a polarity of N, and the portion B thereof has a polarity of S, which is contrary to the circumstance of supplying the power to the first switch 47.

Therefore, when the polarity of the first and second pole pieces 45a and 45b is converted to S, the N pole of the permanent magnet 43 provided on the armature 42 is subject to an attractive magnetic force from the second pole piece 45b, while the S pole of the permanent magnet 43 is subject to a repulsive magnetic force of the first pole piece 45a thereof. Accordingly, the armature 42 shifts toward the second pole piece 45b to be in a portion opposite to that shown in Figure 3A.

Thus, the lever 23a of the swing arm 23 at the state shown in Figure 3A swings counter-clockwise under the tension of the spring 44 to permit the first gear teeth 22a of the rotating gear 22 to be brought into meshing engagement with first gear teeth 30a of the relay gear 30 as shown in Figure 2, with the consequence of blocking the power supply by means of the first power transmitting device and shifting the power of the capstan motor 12 to the second power transmitting device. Thus, the power is transmitted to the idler 10 through the driving and driven pulleys 31 and 34, so that the idler 10 can rotate the reel tables.

On the other hand, by swinging the armature 42 of the positioning controller 24 by as much as, e.g. θ to the state shown in Figure 3A, the lever 23a swings by as much as θ' under the tension of the spring 44. In other words, the lever 23a and shaking lever 42 form an angle of θ-θ', which denotes a state of continuously drawing the lever 23a by the spring 44. As a result, even though the power supplied to the first or second switch 47 or 48 is cut off, the lever 23a and armature 42 can continuously swing and, therefore, the power of the capstan motor 12 can be transmitted to the first or second power transmitting device regardless of blocking the power supplied to the first or second switch 47 or 48.

According to the first embodiment of the power transmitting device of the tape recorder as described above, the power of the capstan motor is selectively transmitted to the first or second power driving unit via the power switching units, thereby loading the tape or driving the reel tables through the first and second power transmitting devices.

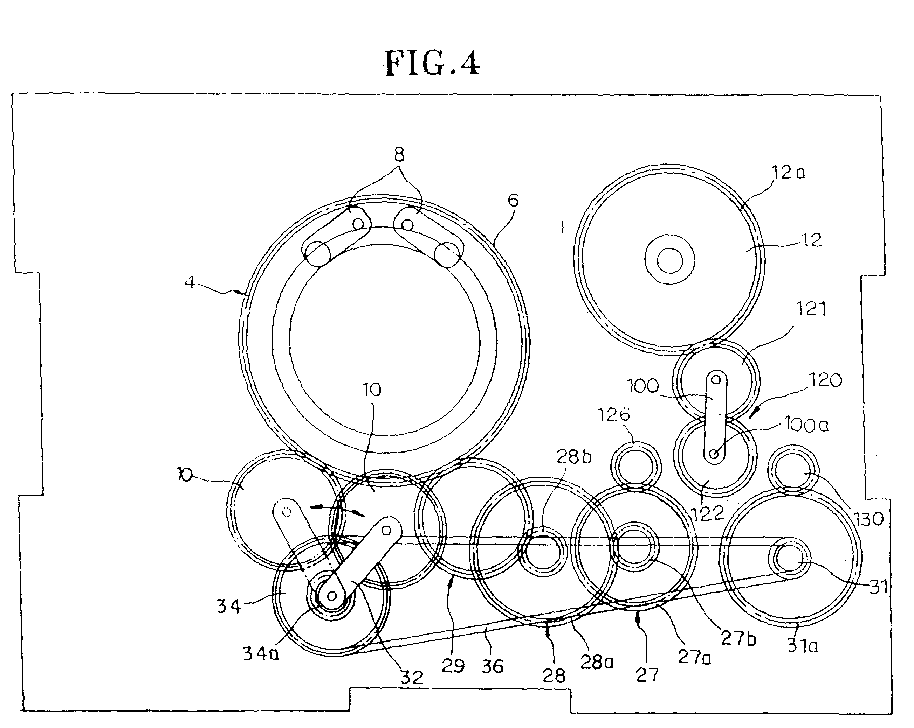

In the second embodiment of the power transmitting device shown in Figure 4, like parts are designated by corresponding reference numerals described with reference to Figure 2, of which a repetitive description will thus be omitted.

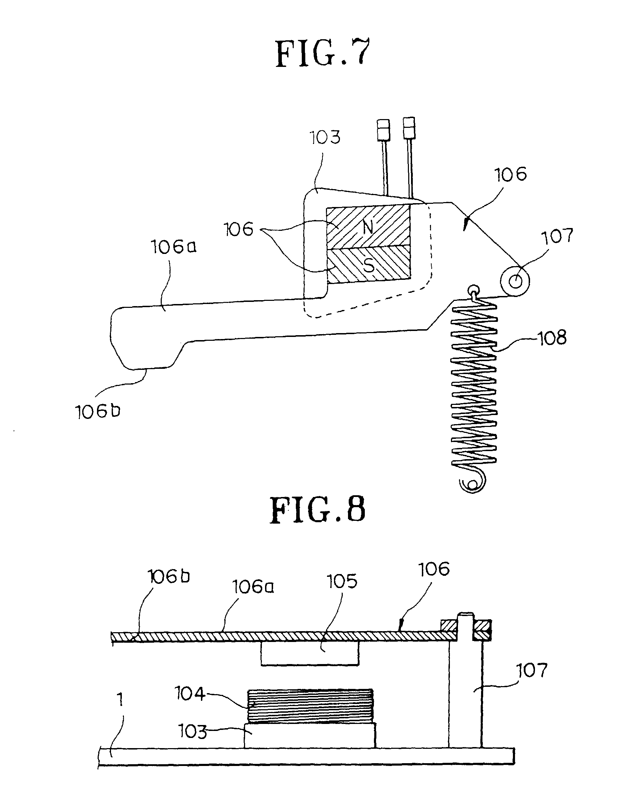

In the second embodiment of the present invention as shown in Figures 4 to 8, a power transmitting device 120 includes a transmission gear 121 in meshing engagement with the gear teeth 12a of the capstan motor 12, and a rotating gear 122 in meshing engagement with the transmission gear 121 and connected thereto by a lever 100. Also, a first gear 126 and a relay gear 130 are installed on both sides of the rotating gear 122 for transmitting power toward the loading system or reel system via respective gears of the tape recorder as described above.

On one side of the power transmitting device 120, as shown in FiGs-5 to 8, a driving coil 104 is mounted on a substrate 103 of the deck 1, and an armature 106 is installed over the driving coil 104 maintaining a predetermined distance such that a permanent magnet 105 having polarities of N and S installed on the armature 106 is opposite the driving coil 104.

The armature 106 can elastically swing resiliently against or under the bias of a spring 108 around a shaft 107 at one end thereof, and a latch plate 106b is forged on the end of an arm 106a extending at another end of the armature 106. The latch plate 106b catches a pin 100a formed on one end of the lever 100 for connecting the transmission gear 121 to rotating gear 122.

As shown in Figure 4, the first gear 126 receives the power of the capstan motor 12 by the power transmitting device 120 to transmit it to the tape loading unit 4 via the second, third and fourth gears 27, 28 and 29, thereby performing loading and unloading operations of the tape. The relay gear 130 is in meshing engagement with the gear 31a of the driving pulley 31 connected to the driven pulley 34 which is connected to the idler 10 via the arm 32, using the timing belt 36. Here, the gear 34a of the driven pulley 34 is brought into meshing engagement with the idler 10 to transmit the power of the capstan motor 12, thereby rotating the reel tables.

An example of the operation of the second embodiment will now be described below.

Once the tape cassette is seated on the reel tables on the deck 1, the cassette-in sensor (not shown) perceives the seating of the tape cassette, to rotate the capstan motor 12, and the transmission gear 121 in meshing engagement with the gear teeth 12a of the capstan motor 12 is rotated. Here, if the transmission gear 121 rotates clockwise, the rotating gear 122 connected by means of the lever 100 swings to be brought into meshing engagement with the first gear 126 to transmit the power to the tape loading unit 4 via the second, third and fourth gears 27, 28 and 29, thereby loading and unloading the tape.

At this time, the tape loading speed can be most properly set by suitably designing the deceleration ratio of the series of decelerating gears 126, 27, 28 and 29. Moreover, well-known speed-control sensors provided in the capstan motor 12 control the rotating speed of the capstan motor 12 to constantly and accurately control the tape loading speed.

Otherwise, if the transmission gear 121 rotates counter-clockwise, the rotating gear 122 connected by means of the lever 100 is moved toward the relay gear 130 to be brought into meshing engagement therewith, so that the idler 10 is driven by means of the driving pulley 31 and driven pulley 34 which are connected by the timing belt 36 to rotate the reel tables.

However, during transmitting the rotational force of the capstan motor 12 to the first gear 126 and relay gear 130 while using the power transmitting device 120, the rotating gear 122 swings to right or left in accordance with the rotational direction of the transmission gear 121 to be brought into meshing engagement respectively with the first gear 126 and relay gear 130. Consequently, if the rotational direction of the transmission gear 121 is changed as required under a state of being in meshing engagement with either gear 126 or 130, the connection of the rotating gear 122 is altered.

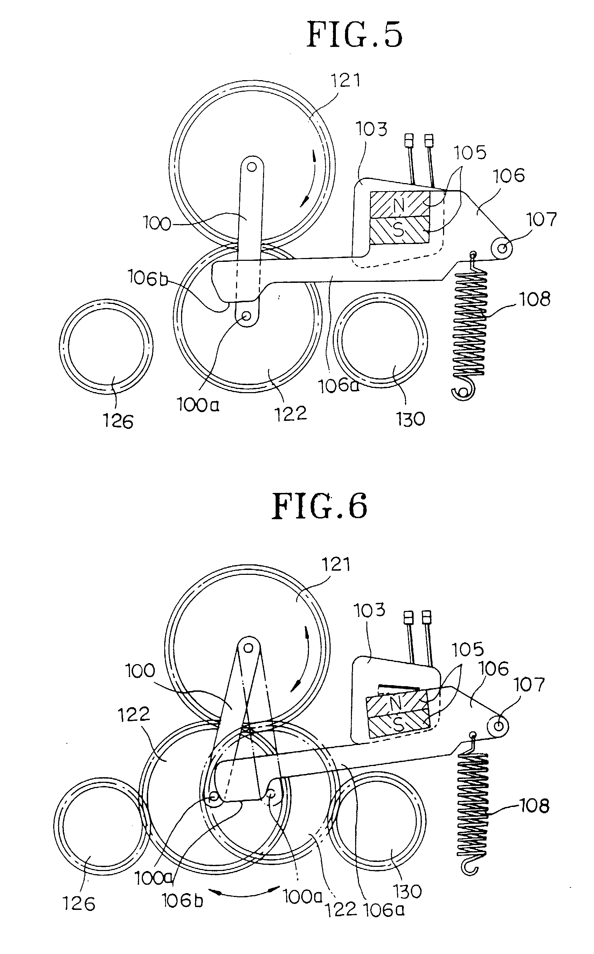

Because of this, according to the second embodiment of the present invention, the inclination of the rotating gear 122 to swing can be forcibly regulated by a positioning controller as shown in FIGs 6, 7 and 8. In more detail, when the rotating gear 122 swings in response to change of modes while the rotating gear 122 is in meshing engagement with either the first gear 126 or relay gear 130 to carry out corresponding modes, the driving coil 104 on the substrate 103 is supplied with power to interact with the permanent magnet 105 opposite thereto, so that the armature 106 moves resiliently clockwise around the shaft 107 by means of the spring 108, as shown in Figure 5.

Thereafter, the rotating gear 122 swings without being interrupted to be brought into meshing engagement with the other gear to perform its corresponding mode. At this time, the power supplied to the driving coil 104 is blocked to return the armature 106 to its original position by the restoring force of the spring 108.

Then, since the latch plate 106b at the end of the arm 106a extending to one side of the armature 106 catches the pin 100a on the upper portion of the lever 100, the rotating gear 122 cannot be swung in spite of changing the rotational direction of the transmission gear 121, to securely transmit the required power.

In the second embodiment of the power transmitting device of the tape recorder as described above, the rotational force of the capstan motor can be properly transmitted to the loading or reel system. Furthermore, the required power can be necessarily transmitted by means of the positioning controller to improve the function of the tape recorder.

In addition, the power of the capstan motor is selectively transmitted to the first and second power transmitting devices via the power switching units, and the tape loading unit and reel tables are driven via the first and second power transmitting devices. Here, a loading motor is dispensed with as compared with a conventional deck, which results in reducing size and weight of the deck to attain minimization. Also, cost and number of components may be decreased, to improve productivity.

While particular embodiments of the present invention have been particularly shown and described, it will be understood by those skilled in the art that various changes in form and details may be effected therein without departing from the scope of the invention which is defined in the appended claims.

## Claims

1. A power transmitting device for a tape recorder for receiving power from a capstan motor (12) to drive both a tape loading system (4) and a tape transport system, said device comprising:
power transmitting means formed of a transmission gear (21) for performing forward and backward rotation by said capstan motor (12), and a rotating gear (22) for swinging at a predetermined angle around a shaft (25) by being brought into meshing engagement with said transmission gear (21);
first power driving means having a first gear (26) mounted on a deck (1) for transmitting rotational force of said capstan motor (12) to said loading system by being selectively brought into meshing engagement with said rotating gear (22);
second power driving means having a relay gear (30) mounted on said deck (1) for transmitting the rotational force of said capstan motor (12) to said tape transport system by being selectively brought into meshing engagement with said rotating gear (22); and
position-control means (24) for preventing said rotating gear (22) from being pushed to deviate in position when driven by said power transmitting means to drive either said first or second power driving means.

2. A power transmitting device as claimed in claim 1, wherein said power transmitting means comprises:
said transmission gear (21) having first gear teeth (21a) in meshing engagement with a gear (12a) of said capstan motor (12), and second gear teeth (21b) in meshing engagement with first gear teeth (22a) of said rotating gear (22);
said rotating gear (22) having said first gear teeth (22a) being selectively brought into meshing engagement with said second gear teeth (21b) of said transmission gear (21) and said relay gear (30) of said second power driving means; and
a swing arm (23) for connecting said transmission gear (21) to said rotating gear (22), and swinging around said shaft (25) by said position-control means (24).

3. A power transmitting device as claimed in claim 1, wherein said power transmitting means comprises a lever (100) for causing said transmission gear (121) to be brought into meshing engagement with said rotating gear (122); and
a pin (100a) projecting at one end of said lever (100) at said rotating gear (122) side.

4. A power transmitting device as claimed in claim 1, 2 or 3, wherein said first power driving means comprises a series of decelerating gears (26-29) consisting of a plurality of gears consecutively arranged for receiving power from said rotating gear (22) to drive said tape loading system (4).

5. A power transmitting device as claimed in any of the preceding claims, wherein said second power driving means comprises said relay gear (30) for receiving power from said power transmitting means; and driving and driven pulleys (31, 34) connected by means of a timing belt (36) for transmitting power from said relay gear (30) to an idler (10).

6. A power transmitting device as claimed in any of the preceding claims, wherein said position-control means comprises a driving coil (104) mounted on a substrate (103), and an armature (106) disposed with a permanent magnet (105) opposite to said driving coil (104) and spaced apart therefrom by a predetermined distance, whereby said armature (106) resiliently swings by a spring (108) around a shaft (107) to regulate the position of said lever (100) of said rotating gear (122).

7. A power transmitting device as claimed in claims 3 and 6, wherein said armature (106) comprises a latch plate (1066) on one end of an arm (106a) extending to one side of the armature (106) to control the position of said projecting pin (100a) formed on said lever (100).

8. A power transmitting device as claimed in claim 3 together with claim 6 or 7, wherein said armature (106) swings around said shaft (107) to release the locking of said projecting pin (100a) position when power is applied to said driving coil (104), and controls the position of said projecting pin (100a) by the restoring force of said spring (108) when power is not applied to said driving coil (104).

9. A power transmitting device as claimed in any of claims 1 to 5, wherein said position-control means comprises:
an armature (42) rotatably connected via a pin (41) to one end of a lever (23a) projecting on one side of a swing arm (23) of said power transmitting means;
a permanent magnet (43) for swinging said armature (42) by a predetermined angle;
a spring (44) connected to one end of said lever (23a) of said swing arm (23) and one end of said armature (42); and
a stator (45) having first and second pole pieces (45a, 45b) close to said permanent magnet (43) of said armature (42).

10. A power transmitting device as claimed in claim 9, wherein said stator (45) comprises a body and a coil (46) wound on said body for supplying a predetermined current, whereby the polarity of said first and second pole pieces (45a, 45b) is determined by the current supplied to said coil (46), to swing said swing arm (23) by the interaction with said permanent magnet (43).

11. A tape recorder and/or player provided with a power transmitting device or tape deck as claimed in any of the preceding claims.

## Patentansprüche

1. Kraftübertragungsvorrichtung für ein Bandaufzeichnungsgerät, die Kraft von einem Bandantriebsmotor (12) empfängt und sowohl ein Bandeinlegesystem (4) als auch ein Bandtransportsystem antreibt, wobei die Vorrichtung umfaßt:
eine Kraftübertragungseinrichtung, die aus einem Übertragungsrad (21), das durch den Bandantriebsmotor (12) vorwärts und rückwärts gedreht wird, sowie einem Drehrad (22) besteht, das über einen vorgegebenen Winkel um eine Welle (25) geschwenkt wird, indem es mit dem Übertragungsrad (21) in kämmenden Eingriff gebracht wird;
eine erste Kraftantnebseinrichtung mit einem ersten Rad (26), das an einem Laufwerk (1) angebracht ist, um Drehkraft des Bandantriebsmotors (12) auf das Einlegesystem zu übertragen, indem es wahlweise in kämmenden Eingriff mit dem Drehrad (22) gebracht wird;
eine zweite Kraftantnebseinrichtung mit einem Weiterleitungsrad (30), das an dem Laufwerk (1) angebracht ist, um die Drehkraft des Bandantriebsmotors (12) auf das Bandtransportsystem zu übertragen, indem es wahlweise in kämmenden Eingriff mit dem Drehrad (22) gebracht wird; und
eine Positionssteuereinrichtung (24), die verhindert, daß das Drehrad (22) so verschoben wird, daß es von seiner Position abweicht, wenn es von der Kraftübertragungseinrichtung angetrieben wird, um entweder die erste oder die zweite Kraftantriebseinrichtung anzutreiben.

2. Kraftübertragungsvorrichtung nach Anspruch 1, wobei die Kraftübertragungseinrichtung umfaßt:
das Übertragungsrad (21) mit ersten Zähnen (21a), die in kämmendem Eingriff mit einem Rad (12a) des Bandantriebsmotors (12) sind, und zweiten Zähnen (21b), die in kämmendem Eingriff mit ersten Zähnen (22a) des Drehrades (22) sind;
das Drehrad (22) mit den ersten Zähnen (22a), die wahlweise in kämmenden Eingriff mit den zweiten Zähnen (21b) des Übertragungsrades (21) und dem Weiterleitungsrad (30) der zweiten Kraftantriebseinrichtung gebracht werden; und
einen Schwenkarm (23), der das Übertragungsrad (21) mit dem Drehrad (22) verbindet und durch die Positionssteuereinrichtung (24) um die Welle (25) geschwenkt wird.

3. Kraftübertragungsvorrichtung nach Anspruch 1, wobei die Kraftübertragungseinrichtung einen Hebel (100) umfaßt, der bewirkt, daß das Übertragungsrad (121) in kämmenden Eingriff mit dem Drehrad (121) gebracht wird; und
einen Zapfen (100a), der an einem Ende des Hebels (100) an der Seite des Drehrades (122) vorsteht.

4. Kraftübertragungsvorrichtung nach Anspruch 1, 2 oder 3, wobei die erste Kraftantriebseinrichtung eine Reihe von Untersetzungsrädem (26-29) umfaßt, die aus einer Vielzahl von Rädem besteht, die hintereinander angeordnet sind und Kraft von dem Drehrad (22) empfangen, um das Bandeinlegesystem (4) anzutreiben.

5. Kraftübertragungsvorrichtung nach einem der vorangehenden Ansprüche, wobei die zweite Kraftantriebseinrichtung das Weiterleitungsrad (30) umfaßt, das Kraft von der Kraftübertragungseinrichtung empfängt; sowie eine treibende und eine angetriebene Riemenscheibe (31,34), die mittels eines Zahnriemens (36) verbunden sind, um Kraft von dem Weiterleitungsrad (30) auf ein Zwischenrad (10) zu übertragen.

6. Kraftübertragungsvorrichtung nach einem der vorangehenden Ansprüche, wobei die Positionssteuereinrichtung eine Antriebsspule (104) umfaßt, die auf einem Träger (103) angebracht ist, sowie einen Anker (106), der mit einem Permanentmagneten (105) gegenüber der Antriebsspule (104) und von selbiger um einen vorgegebenen Abstand entfernt angeordnet ist, wobei der Anker (106) von einer Feder (108) fedemd um eine Welle (107) geschwenkt wird, um die Position des Hebels (100) des Drehrades (122) zu steuem.

7. Kraftübertragungsvorrichtung nach den Ansprüchen 3 und 6, wobei der Anker (106) eine Rastplatte (106b) an einem Ende eines Arms (106a) umfaßt, der sich auf einer Seite des Ankers (106) erstreckt, um die Position des vorstehenden Zapfens (100a) zu steuem, der an dem Hebel (100) ausgebildet ist.

8. Kraftübertragungsvorrichtung nach Anspruch 3 zusammen mit Anspruch 6 oder 7, wobei der Anker (106) um die Welle (107) herum geschwenkt wird, um die Arretierung der Position des vorstehenden Zapfens (100a) zu lösen, wenn Spannung an der Antriebsspule (104) anliegt, und die Position des vorstehenden Zapfens (100a) durch die Rückstellkraft der Feder (108) steuert, wenn keine Spannung an der Antriebsspule (104) anliegt.

9. Kraftübertragungsvorrichtung nach einem der Ansprüche 1 bis 5, wobei die Positionssteuereinrichtung umfaßt:
einen Anker (42), der über einen Zapfen (41) drehbar mit einem Ende eines Hebels (23a) verbunden ist, der an einem Ende eines Schwenkarms (23) der Kraftübertragungseinrichtung vorsteht;
einen Permanentmagneten (43), der den Anker (42) über einen vorgegebenen Winkel schwenkt;
eine Feder (44), die mit einem Ende des Hebels (23a) des Schwenkarms (23) und einem Ende des Ankers (42) verbunden ist; und
einen Ständer (45) mit einem ersten und einem zweiten Polstück (45a,45b) in der Nähe des Permanentmagneten (43) des Ankers (42).

10. Kraftübertragungsvorrichtung nach Anspruch 9, wobei der Ständer (45) einen Körper und eine Spule (46) umfaßt, die auf den Körper gewickelt ist, um einen vorgegebenen Strom zuzuführen, wobei die Polarität des ersten und des zweiten Polstücks (45a,45b) durch den der Spule (46) zugeführten Strom bestimmt wird, um den Schwenkarm (23) durch das Zusammenwirken mit dem Permanentmagneten (43) zu schwenken.

11. Bandaufzeichnungsgerät und/oder -abspielgerät, das mit einer Kraftübertragungsvorrichtung bzw. einem Bandlaufwerk nach einem der vorangehenden Ansprüche versehen ist.

## Revendications

1. Dispositif de transmission de force pour un magnétophone, destiné à recevoir une force d'un moteur de cabestan (12) afin d'entraîner à la fois un système de chargement de bande (4) et un système de transport de bande, le dispositif de transmission de force comportant :
des moyens de transmission de force comprenant un pignon de renvoi (21) destiné à tourner vers l'avant et vers l'arrière sous l'action du moteur de cabestan (12), et un pignon rotatif (22) destiné à pivoter suivant un angle prédéterminé autour d'un axe (25) lorsqu'il vient s'engrener avec ledit pignon de renvoi (21) ;
des premiers moyens d'entraînement comprenant un premier pignon (26) monté sur une platine (1) pour transmettre une force de rotation du moteur de cabestan (12) au système de chargement en étant sélectivement engrené avec le pignon rotatif (22) ;
des seconds moyens d'entraînement comprenant un pignon de relais (30) monté sur la platine (1) pour transmettre la force de rotation du moteur de cabestan (12) au système de transport de bande en étant sélectivement engrené avec le pignon rotatif (22) ; et
des moyens de contrôle de position (24) pour empêcher que le pignon rotatif (22) soit poussé et dévié de sa position lorsqu'il est entraîné par les moyens de transmission de force pour entraîner soit les premiers, soit les seconds moyens d'entraînement.

2. Dispositif de transmission de force selon la revendication 1, dans lequel les moyens de transmission de force comportent
le pignon de renvoi (21) pourvu de premières dents (21a) qui s'engrènent avec un pignon (12a) du moteur de cabestan (12), et de secondes dents (21b) qui s'engrènent avec les premières dents (22a) du pignon rotatif (22),
le pignon rotatif (22) pourvu des premières dents (22a) qui sont engrenées sélectivement avec les secondes dents (21b) du pignon de renvoi (21) et avec le pignon de relais (30) des seconds moyens d'entraînement ; et
un bras pivotant (23) qui est destiné à relier le pignon de renvoi (21) au pignon rotatif (22) et qui pivote sur l'axe (25) grâce aux moyens de contrôle de position (24).

3. Dispositif de transmission de force selon la revendication 1, dans lequel les moyens de transmission de force comportent un levier (100) destiné à provoquer l'engrènement du pignon de renvoi (121) avec le pignon rotatif (122) ; et
une tige (100a) qui fait saillie à une extrémité du levier (100), du côté du pignon rotatif (122).

4. Dispositif de transmission de force selon les revendications 1, 2 ou 3, dans lequel les premiers moyens d'entraînement comportent une série de pignons de décélération (26-29) formée de plusieurs pignons disposés à la suite les uns des autres pour recevoir une force à partir du pignon rotatif (22) en vue d'entraîner le système de chargement de bande (4).

5. Dispositif de transmission de puissance selon l'une quelconque des revendications précédentes, dans lequel les seconds moyens d'entraînement comportent le pignon de relais (30) destiné à recevoir une force à partir des moyens de transmission de force ; et une poulie d'entraînement et une poulie entraînée (31, 34) reliées par une courroie de synchronisation (36) pour transmettre une force entre le pignon de relais (30) et un galet-tendeur (10).

6. Dispositif de transmission de force selon l'une quelconque des revendications, dans lequel les moyens de contrôle de position comportent une bobine de commande (104) montée sur un support (103), et une armature (106) sur laquelle un aimant permanent (105) est disposé en face de ladite bobine de commande (104) et séparé de celle-ci par une distance prédéterminée, l'armature (106) pivotant de manière élastique grâce à un ressort (108) autour d'un axe (107) pour régler la position du levier (100) du pignon rotatif (122).

7. Dispositif de transmission de force selon les revendications 3 et 6, dans lequel l'armature (106) comporte une plaque de verrouillage (106b) à une extrémité d'un bras (106a) qui s'étend vers un côté de l'armature (106) pour contrôler la position de la tige saillante (100a) formée sur le levier (100).

8. Dispositif de transmission de force selon les revendications 3 et 6 ou 7, dans lequel l'armature (106) pivote autour de l'axe (107) pour supprimer le blocage de la position de la tige saillante (100a) quand une force est appliquée à la bobine de commande (104), et contrôle la position de ladite tige saillante (100a) grâce à la force de rappel du ressort (108) quand une force n'est pas appliquée à la bobine de commande (104).

9. Dispositif de transmission de force selon l'une quelconque des revendications 1 à 5, dans lequel les moyens de contrôle de position comportent :
une armature (42) reliée en rotation, par l'intermédiaire d'une tige (41), à une extrémité d'un levier (23a) saillant sur un côté d'un bras pivotant (23) des moyens de transmission de force ;
un aimant permanent (43) pour faire pivoter l'armature (42) suivant un angle prédéterminé ;
un ressort (44) relié à une extrémité du levier (23a) du bras pivotant (23) et à une extrémité de l'armature (42) ; et
un stator (45) présentant près de l'aimant permanent (43) de l'armature (42) une première et une seconde pièce polaire (45a, 45b).

10. Dispositif de transmission de force selon la revendication 9, dans lequel le stator (45) comporte un corps et une bobine (46) enroulée sur ce corps pour fournir un courant prédéterminé, la polarité des première et seconde pièces polaires (45a, 45b) étant déterminée par le courant fourni à ladite bobine (46) pour faire pivoter le bras pivotant (23) grâce à l'interaction avec l'aimant permanent (43).

11. Enregistreur et/ou lecteur à bande pourvu d'un dispositif de transmission de force ou d'une platine de bande selon l'une quelconque des revendications précédentes.
